**Europäisches Patentamt**

**European Patent Office**

**Office européen des brevets**

(19)

(11) Veröffentlichungsnummer: **0 176 963 B1**

(12) # EUROPÄISCHE PATENTSCHRIFT

(45) Veröffentlichungstag der Patentschrift: **24.07.91**

(51) Int. Cl.⁵: **C02F 1/04, B09B 3/00**

(21) Anmeldenummer: **85112214.3**

(22) Anmeldetag: **26.09.85**

(54) **Verfahren und Vorrichtung zum Abtrennen der komplex zusammengesetzten Fracht aus flüssigen Abfällen wie Industrieabwässern und Deponiesickerwässern.**

(30) Priorität: **28.09.84 DE 3435735**

(43) Veröffentlichungstag der Anmeldung:
**09.04.86 Patentblatt 86/15**

(45) Bekanntmachung des Hinweises auf die
Patenterteilung:
**24.07.91 Patentblatt 91/30**

(84) Benannte Vertragsstaaten:
**AT BE CH FR GB IT LI LU NL SE**

(56) Entgegenhaltungen:
EP-A- 0 094 547      DE-A- 2 514 862
FR-A- 2 187 707      FR-A- 2 375 548
US-A- 2 981 693      US-A- 3 642 583
US-A- 4 236 973

(73) Patentinhaber: **von Beckerath, Kurt,
Dr.rer.nat.,Dipl.-Chem.
Birkenstrasse 27
W-8170 Bad Tölz - Ellbach(DE)**

(72) Erfinder: **von Beckerath, Kurt,
Dr.rer.nat.,Dipl.-Chem.
Birkenstrasse 27
W-8170 Bad Tölz - Ellbach(DE)**

(74) Vertreter: **Rotter, Ulrich Dr. et al
Ruschke & Partner Patentanwälte Pienzenauerstrasse 2
W-8000 München 80(DE)**

**Beschreibung**

Die Erfindung betrifft ein Verfahren und eine zu dessen Durchführung besonders geeignete Vorrichtung zum Reinigen von komplex zusammengesetzten, organisch und/oder anorganisch belasteten flüssigen Abfällen, insbesondere von derartig belasteten Industrieabwässern und Deponiesickerwässern, durch ein- oder mehrstufige destillative Behandlung im sauren oder alkalischen Bereich mit anschließender Nachbehandlung der Destillationsfolgeprodukte.

Insbesondere bezieht sich die Erfindung auch auf die Behandlung der stark belasteten problematischen Abfälle und Abwässer, die Gehalte an polychlorierten organischen aromatischen und anderen cyclischen organischen Verbindungen enthalten, und deren Beseitigung unter ökologisch und gesundheitsrelevant annehmbaren Bedingungen, was bisher zu erheblichen Schwierigkeiten geführt hat. Diese Problematik hat mit Begriffen wie "Dioxin", "Lindan" in der Öffentlichkeit eine hohe Aufmerksamkeit erlangt.

Flüssige Abfälle, die bei der Industrie-, Kommunal- und Haushaltsentsorgung anfallen, speziell jedoch flüssige Sonderabfälle, enthalten sehr unterschiedliche Belastungen von organischen und/oder anorganischen Frachten, die teilweise nur schwer oder überhaupt nicht biologisch abbaubar sind und auch auf andere Weise nicht unschädlich gemacht oder entfernt werden können. Zu solchen stark belastenden Frachten gehören Phenole, naphthenische Verbindungen, Mineralölkomponenten und Komplexbildner sowie andere Inhaltsstoffe. Noch schwerwiegender gestaltet sich das Problem bei Deponiesickerwässern, speziell von Sondermülldeponien, weil hier eine bevorzugte Auslaugung von löslichen Stoffkomponenten vorangeht. Derartige Wässer können aufgrund ihrer starken Belastung weder direkt noch nach herkömmlicher Behandlung in einen Vorfluter oder in die Klärwerkstufe eingeleitet werden.

Die bisher angewendeten Methoden zur Behandlung von flüssigen Abfällen führen bei vertretbarem Aufwand nicht zu dem gewünschten Erfolg der Herabsetzung der Schadstoffkonzentration auf einen Gehalt, der nicht mehr als schädlich betrachtet wird. Die bekannten Verfahren wie Entgiften, Neutralisieren, Oxidieren erfordern zudem einen erhöhten Chemikalienaufwand und vergrößern vielfach in unannehmbarer Weise die Abwassersalzfracht. Besonders extrem liegen die Verhältnisse bei Schadstoffen wie polychlorierten aromatischen Kohlenwasserstoffen, die schon in äußerst niedrigen Konzentrationen und bestimmten Derivatisierungen ganz erhebliche Umweltbelastungen verursachen und deren Beseitigung bis heute noch nicht befriedigend gelöst ist.

Es ist bekannt, Abwässer aus der Industrie und gwerblichen Wirtschaft je nach ihrer Herkunft, z.B. aus dem Bereich der Oberflächenveredlung von Metallen und Kunststoffen, aus Reinigungs- und Entfettungsvorgängen, aus chemischen und petrochemischen Prozessen und dergl., durch spezielle Behandlungsverfahren, wie Fällung bestimmter Inhaltsstoffe, Umwandlung giftiger Inhaltsstoffe in ungiftige Verbindungen, Spaltung von Emulsionen usw. aufzuarbeiten.

Derartige Abwasserbehandlungsprozesse geschehen in der Regel in Anlagen mit Stand- oder Durchlaufprozeßführung. Die bei diesen Verfahren entstehenden Fällungsprodukte, Niederschläge, abtrennbaren Phasen werden durch mechanische Trennung und/oder durch Absorption an geeigneten Absorptionsmitteln aus den Abwässern entfernt. Wegen der Komplexität und der unterschiedlichen Zusammensetzung werden vielfach Verfahrenskombinationen angewendet. Eine Übersicht über den aktuellen Stand der Abwasserentsorgung in der metallverarbeitenden Industrie findet sich in L.Hartinger, Taschenbuch der Abwasserbehandlung für die metallverarbeitende Industrie, Band 1: Chemie, Carl Hanser Verlag München-Wien, 1976. In dem Aufsatz "Vorbehandlung durch Dekantieren, Entgiften und Neutralisieren", Abfallwirtschaft in Forschung und Praxis, S. 78 - 96, 5 (1978) faßt R. Meixlsperger die Ziele der Vorbehandlung von Sonderabfällen dahingehend zusammen, daß ihre chemischen, physikalischen und toxikologischen Eigenschaften so zu verändern sind, daß sie anschließend wiederverwertet, verbrannt oder deponiert werden können. Diese Vorbehandlung läuft prinzipiell auf eine möglichst weitgehende Auftrennung des flüssigen Abfalls in eine Wasserphase und in eine Öl- und Schlammphase hinaus, die dann neutralisiert wird. Demgegenüber ist eine gewollte zusätzliche Belastung oder Befrachtung der Wasserphase mit Schadstoffkomponenten ebenso wenig in Betracht gezogen worden wie eine gezielte Azidifizierung oder Alkalisierung des Abwassers vor dieser Auftrennung. In den meisten Fällen stellen die bisher bekannten Verfahren lediglich unzureichende Kompromißlösungen dar.

Andere Abwasserbehandlungsverfahren beruhen darauf, daß das Abwasser aus Industrie und gewerblicher Wirtschaft, oft nach Vorbehandlung bspw. durch Flockungs- und Fällungsprozesse, einer biologischen Kläranlage zugeführt werden. Hierbei entstehen Klärschlämme, in denen die verschiedensten Schadstoffe des Abwassers angereichert werden können, so daß die Verwertung des Klärschlamms z.B. als Bodenverbesserer oft nicht mehr gewährleistet ist. Dennoch wird der biologischen Sickerwasserbehandlung wegen der technischen Beherrschbarkeit und der relativ guten Reinigungsergebnisse ein hoher Stellenwert eingeräumt, vgl. R. Stegmann, "Reinigung und Verregnen von Müllsickerwasser unter Betriebsbedingungen",

EP 0 176 963 B1

Veröffentlichungen des Instituts für Stadtbauwesen, TU Braunschweig, 1979.

Alle bisher bekannten naßchemischen und physikalischen Verfahren, aber auch die biologischen Abwasserbehandlungsverfahren haben den Nachteil, daß sie stets nur spezielle Inhaltsstoffe oder ggf. gruppenspezifische Inhaltsstoffe zu behandeln vermögen. Die Gesamtmenge des Abwassers wird hierbei in der Regel kaum vermindert, sondern durch Zugabe der Chemikalien und Lösungen meistens noch beträchtlich erhöht. Durch den Chemikalienzusatz erfährt das Abwasser zusätzlich eine hohe Salzfracht, die bei der Einleitung in ein kommunales Klärwerk nicht abgebaut werden kann, sondern voll auf den Vorfluter durchschlägt. Es fallen deshalb nicht unerhebliche Mengen an Schlämmen an, die deponiert oder verbrannt werden müssen. Außerdem können die naßchemischen und biologischen Abwasserreinigungsverfahren einige Schadstoffe oder Schadstoffgruppen überhaupt nicht entfernen. Ammoniumionen und Amine lassen sich durch Fällungsreaktionen nicht aus dem Abwasser entfernen. Diese Verbindungen sind jedoch äußerst bedenklich, da sie z.B. eine erhebliche Fischtoxizität besitzen. Auch die restlose Beseitigung von Schwermetallen und biologisch nichtabbaubaren organischen Verbindungen ist mit den derzeit durchgeführten Abwasserreinigungsverfahren nicht möglich. Besonders bedeutsam ist dies, wenn die Sickerwässer von Deponien nicht nur aus reinen Hausmülldeponien, sondern aus Hausmüll-plus Industriemülldeponien oder aus Sonderabfalldeponien stammen.

Zur Behandlung von Phenole enthaltenden Abwässern wird in der DE-A 25 14 862 vorgeschlagen, dem Abwasser zunächst Alkalihydroxid zuzusetzen und das Gemisch teilweise unter Waschwirkung zu verdampfen und von flüchtigen Produkten zu befreien und anschließend die zurückbleibende Flüssigkeit zu destillieren, wobei der Dampf durch Einleiten in Alkalihydroxid gewaschen wird, während vom Destillationsrückstand Mineralsalze und Waser entfernt werden, bevor die organischen Materialien ggf. verbrannt werden. Das Dampfkondensat wird vorzugsweise mit Aktivkohle behandelt, und die Abwässer werden durch den Alkalizusatz vorzugsweise neutral gestellt. Das zu behandelnde Abwasser hat eine mehr oder weniger bekannte Zusammensetzung bezüglich der Verunreinigungen (vor allem Phenol, Ammoniak).

In der FR-A 21 87 707 wird ein ähnlich zusammengesetztes und vor allem Phenole und Ammoniak enthaltendes Abwasserrückstandsgemisch für die Verbrennung dadurch vorbereitet, daß Alkalihydroxidlösung zugesetzt wird, um flüchtige Produkte wie Ammoniak einer Teilverdampfung zu unterziehen, und dann der Rückstand destilliert wird, während man den Dampf einer Alkaliwäsche unterzieht, um das Phenolat möglichst vollständig in die Rückstandsphase zu verbringen. Das zurückbleibende Produkt wird dann der Verbrennung zugeführt. Im wesentlichen ähnelt dieses Verfahren dem der DE-A 25 14 862.

Ein Verfahren, bei dem man das "Lösemittel Wasser", das den größten Teil aller Abwässer ausmacht, von den anhaftenden Gesamtfrachten so weitgehend abtrennt, daß nur kleinere Mengen an Fracht zurückbleiben und beseitigt werden können oder daß der im behandelten Wasser verbleibende Schadstoffanteil mit wirtschaftlich vertretbarem Aufwand entfernt und beseitigt werden kann, würde zu einer bedeutsamen Bereicherung der Technik führen. Bei der Beseitigung von hoch belasteten Abwässern ist es erforderlich, die in ihrer Zusammensetzung stark schwankenden und unterschiedlich aufgebauten Abwässer so zu reinigen und aufzuarbeiten, daß die Inhaltsstoffe vollständig bzw. so weitgehend entfernt werden, daß das Wasser dem Vorfluter oder der Kläranlage zugeführt werden kann, andererseits die abgetrennten Inhaltsstoffe in einer deponiefähigen und transportfähigen Form sondiert werden, um eine Beeinträchtigung von Mensch und Tier auszuschließen.

Der Erfindung liegt als Aufgabe zu Grunde, die komplex zusammengesetzte Fracht mit organischen und/oder anorganischen Inhaltsstoffen aus den flüssigen Abfällen so abzutrennen, daß gleichzeitig eine weitgehende Reinigung des Abwassers und Überführung der Fracht in bedenkenlos deponierbare Endprodukte erreicht wird.

Zur Lösung dieser Aufgabe dient das im Anspruch 1 angegebene Verfahren, mit bevorzugten Ausgestaltungen nach den Ansprüchen 2 bis 18. Ein weiterer Erfindungsgegenstand ist eine zur Durchführung dieser Verfahren geeignete Vorrichtung gemäß Anspruch 19 mit bevorzugten Ausführungsformen nach den Ansprüchen 20 bis 27.

Erfindungsgemäß wird das aufzubereitende Abwasser, das je nach Herkunft eine unterschiedliche Zusammensetzung und Belastung aufweisen kann, zunächst mit Säure oder Alkali auf einen sauren bzw. alkalischen Bereich eingestellt und vorzugsweise auch während des Auftrennprozesses bei diesem pH-Wert, ggf. durch Nachdosierung von Säure bzw. Lauge in dem Fall, wo sich die Azidität/Alkalinität des Abwassers ändert, gehalten. Als Säuren kommen die üblichen und nach Möglichkeit nichtflüchtige Säuren in Betracht, wie Schwefelsäure; geeignete Alkalien sind die Alkalihydroxidlösungen, wie Natrium- und Kaliumhydroxid, ggf. auch Alkalicarbonate.

Die bevorzugt einzustellenden pH-Wertbereiche liegen bei einer sauren Destillation bei pH 2,5 bis 4,5 und besonders bevorzugt bei pH 3,0 bis 3,5; die bevorzugt eingestellten pH-Werte für die alkalische Destillation belaufen sich auf Werte größer als pH 11 und vorzugsweise auf einen pH-Wert von etwa 12,0

3

bis 12,5.

Die Wahl des Mittels zur pH-Werteinstellung hängt u.a. auch von der speziellen Zusammensetzung des Abwassers ab, da über das Säureanion zusätzlich ein das Lösungsprodukt von anorganischen Frachtanteilen steuernder Faktor eingeführt wird (Fällen von schwerlöslichen Metallsulfaten oder Metallcarbonaten).

Die Destillation von Wässern mit organischen und/oder anorganischen Inhaltsstoffen führt grundsätzlich dazu, daß die unter den angewendeten Destillationsbedingungen nichtflüchtigen Stoffe im Destillationsrückstand verbleiben und daß zusammen mit dem Wasserdampf verschiedene Stoffe , z.T. azeotrop, in die Destillatphase gelangen. Dabei kommt es aufgrund des sehr komplexen Systems allerdings auch zu einer wechselseitigen Beeinflussung, so daß es möglich wird, auch Stoffe mit geringer Flüchtigkeit ab- bzw. aufzutrennen, so daß unter bestimmten Bedingungen eine gezielte Herabsetzung der Konzentration eines bestimmten Einzelstoffes im Destillationsrückstand erreicht und eine Wasserphase erhalten wird mit reziprok angereicherter Konzentration des Inhaltsstoffes bzw. seiner Umsetzungsprodukte.

Die Destillation bei sauren oder alkalischen pH-Werten modifiziert das Destillationsverhalten sehr vieler Schadstoffe in der Abwasserfracht ganz erheblich. Je nach den pH-Wertbedingungen können einige Stoffe nämlich so verändert werden, daß sie flüchtig werden oder zumindest als azeotropsiedende Stoffe mit den Wasserdampf überdestillieren.

So kann bei einer alkalischen Destillationsführung im Bereich von etwa pH 12 erreicht werden, daß Ammoniumionen als Ammoniak flüchtig werden und als Gase entweichen. Weiterhin wird durch alkalische Destillation erreicht, daß leichtflüchtige Amine freigesetzt werden und/oder daß durch Verseifung Ester gespalten werden und Alkohole und dergl. entstehen, die ganz oder teilweise azeotrop mit übergehen. Andererseits werden bei einer Durchführung der Erfindung mittels einer Prozeßführung im alkalischen Milieu Säuren in Form ihrer Alkali- oder Erdalkalisalze im Destillationsrückstand zurückgehalten. Alkalieinstellung führt aber auch zu einer Spaltung von Komplexsalzen wie beispielsweise von Schwermetallkomplexsalzen, insbesondere von Kupfersalzkomplexen mit Ammoniak oder Aminen.

Bei einer sauren Prozeßführung , beispielsweise bei einem pH von 3,0, werden Amine und/oder Ammoniumverbindungen als Salze der zugesetzten Säure schwerer flüchtig und dadurch im Destillationsrückstand angereichert, während z.B. organische Säuren wie Fettsäuren und Phenole, aber auch flüchtige anorganische Säuren freigesetzt werden und in die Destillatphase übertreten können.

Weitere Parameter zur Steuerung der Destillation, der Zusammensetzung der Destillationsprodukte und der Destillationsausbeute sind die üblichen Destillationsparameter, wie Temperatur und Druck.

Wird bei Normaldruck destilliert, kann die Temperatur bis ca. 125°C reichen, was mit der komplexen Zusammensetzung des Abwassers zusammenhängt. Günstiger ist jedoch eine Destillation unter vermindertem Druck, wobei ein Vakuum von etwa 120 mbar oder weniger, vorzugsweise von 80 bis 100 mbar, vorteilhaft ist, da dann Temperaturen von höchstens 100°C oder noch tiefer liegende Destillationstemperaturen angewendet werden können.

Durch Einstellen der Destillationszeit ist ein weiterer Parameter gegeben.

Die Destillationsausbeute, d.i. der Destillatanteil aus dem Abwasser, beläuft sich bei den meisten Abwässern auf mindestens 90 %, vorzugsweise sogar auf 95 % bei der Primärdestillation. Bei der Sekundärdestillation liegt der Destillationsgrad wegen der Vorfraktionierung noch höher. Allgemein gilt, daß mindestens 50 % des Abwassers destillativ abgetrennt werden.

Erfindungsgemäß lassen sich erhebliche Einflüsse auf die Art der Rückstände und der im Destillat befindlichen Inhaltsstoffe bewirken, was durch Anwendung einer zweimaligen Destillation, also sauer/alkalisch oder alkalisch/sauer (bezogen auf die Reihenfolge der ersten und der zweiten Verdampfereinrichtung in Stromflußweise) noch beträchtlich verstärkt werden kann und ein ganzes Modulationsspektrum der Destilaltionsauftrennungsmöglichkeiten eröffnet.

Vorzugsweise wird das Brüdenkondensat aus der Primärverdampfung auf einen pH-Wert im Bereich von etwa 12,0 bis 12,5 eingestellt und nachbehandelt.

Die Destillate, die nur noch einen Teil der ursprünglich vorhandenen organischen Fracht und im wesentlichen keine rein anorganische Fracht mehr enthalten, lassen sich nunmehr im Gegensatz zum komplexen Ausgangsprodukt durch verschiedene Nachbehandlungsverfahren (Aktivkohlebehandlung, biologischen Abbau, Umkehrosmose, Behandeln mit Absorberharzen) so behandeln, daß eine Ableitung des geklärten und gereinigten Wassers ohne Nachteile für die Umwelt möglich ist. Das Klarwasser kann der Klärstufe oder dem Vorfluter derselben zugeführt werden.

Die Destillationsrückstände, die aus dem Verdampferkreislauf zumindest teilweise herausgeschleust werden, werden von ihrer flüssigen Phase getrennt, wobei die flüssige Phase (Klarlauf) wieder in den Umlaufverdampfer zurückgeführt wird, während die abgeschiedenen Feststoffe beseitigt oder nachbehandelt werden (Deponierung oder Verbrennung). Ein besonders wirksames und beherrschbares Verfahren der Nachbehandlung ist das Erschmelzen des Rückstandes, ggf. nach einer noch weitergehenden Trocknung mittels einer Vakuumanlage, wobei die Schadstoffe endgültig zersetzt und als Schmelzgut , ggf. deponiert in einem abgeschlossenen Behälter, abgelagert werden.

Die destillative Auftrennung sollte aus energetischen Gründen bei unteratmosphärischem Druck erfolgen. Zusätzlich wird hierdurch erreicht, daß eventuell entstehende Gase und Dämpfe zentral erfaßt und behandelt werden können und nicht unbehandelt in die Atmosphäre gelangen.

Auch die Entwässerung des ausgekreisten Feststoffanteils wird vorzugsweise unter Vakuum vorgenommen, um eine weitgehende Entfernung der anhaftenden Wasserphase zu erreichen und eine Emission zu vermeiden.

Bei alkalischer Prozeßführung können die Destillationsrückstände anschließend sogar direkt in einer Alkalischmelze behandelt werden. In einer alkalischen Schmelze werden dabei insbesondere Organohalogenverbindungen zersetzt, so daß ungiftige Reaktionsprodukte entstehen, die unbedenklich deponiert werden können. Die Schmelzaufbereitung des Destillationsrückstandes hat den weiteren Vorteil, daß die endgültige Schadstoffvernichtung bereits vor Ort innerhalb der Anlage möglich ist, so daß bei der Ausführung in einem geschlossenen System der Transport eines völlig schadstofffreien Gutes gewährleistet wird, das keine Gefahren wie beim Transport hochgiftiger Produkte mehr verursachen kann.

Die Destillatphase kann gegebenenfalls über geeignete Absorptionsmittel, wie z.B. Aktivkohle geleitet werden, wodurch die in der Destillatphase befindlichen organischen Restfrachten entfernt werden.

Es ist vorteilhaft und daher bevorzugt, der Verdampferstufe, insbesondere der Primärverdampfung, ein Entschäumeröl zuzudosieren und gegebenenfalls das durch Überschäumen übergehende Produkt abzutrennen und vorzugsweise wieder in die Verdampferstufe zurückzuleiten.

Die Abluft des Vakuumdestillationsprozesses kann ebenfalls über geeignete Absorptionsanlagen, z.B. mit Aktivkohle, geleitet werden, oder kann einer Verbrennungsanlage zugeführt werden, wenn sie schädliche Belastungen enthält.

Um Stoffe, die leichtflüchtig sind, oder die durch die alkalische bzw. saure Einstellung des Abwassers in leichtflüchtige Stoffe umgewandelt werden, aus dem Abwasser vor der eigentlichen

Destillation zu entfernen, kann das Abwasser vorzugsweise in einer der Destillation vorgeschalteten Strippkolonne von diesen flüchtigen Verbindungen befreit werden. Dies ist oft deshalb von Bedeutung, weil die Vakuumanlage durch diese flüchtigen Stoffe überlastet würde und die Gasbildung während der Destillation zu Schaumproblemen führen kann.

Die an der Strippkolonne austretenden Dämpfe können nachbehandelt oder beispielsweise durch Verbrennung schadlos beseitigt werden. So kann z.B. gebildetes Ammoniak ausgewaschen und in Ammoniumsalze überführt werden.

Erfindungsgemäß wird die Prozeßführung so gewählt, daß in der ersten Verdampferstufe das Abwasser aufkonzentriert wird, wobei die Verdampfungsbrüden zur Aufheizung des nachgeschalteten zweiten Verdampfers benutzt werden.

Wie bereits erwähnt, ist es vorteilhaft, die Destillation zunächst im Sauren oder im Alkalischen zu beginnen und die aus dieser Destillation resultierenden Destillate nochmals unter Einstellung des entgegengesetzt gerichteten pH-Wertes erneut zu destillieren.

Für die Nachbehandlung des Destillats ist ggf. eine pH-Werteinstellung auf einen neutralen pH, vorzugsweise etwa 6 bis 8, günstig. Es kann in dieser Form beispielsweise gut mit Aktivkohle nachbehandelt werden.

Insbesondere führt die Behandlung von Abwässern mit Anteilen an polyhalogenierten ein- oder mehrkernigen aromatischen und/oder anderen cyclischen Verbindungen zu einer Trennung dieser Stoffe in die drei möglichen Fraktionen (Destillationsrückstand, Destillat, Abluft), aus denen sie dann gezielt entweder entfernt oder zusammen mit dem vom Wasser abgetrennten Rückstand deponiert, verbrannt oder durch Schmelze beseitigt werden. Das erfindungsgemäße Verfahren ermöglicht somit gerade im Hinblick auf die hochbelastenden und biologisch nicht abbaubaren Schadstoffe einen Weg, bestimmte Höchstkonzentrationen zu unterschreiten bzw. Mindestanforderungen an gesetzte Limite bei weitem zu unterbieten.

Die Erfindung findet besondere Anwendung bei Abwässern, die polychlorierte Verbindungen wie Hexachlorcyclohexan, polychlorierte Biphenyle, polychlorierte Dibenzofurane, polychlorierte Dibenzodioxine oder Chlorphenolderivate enthalten.

Durch die Erfindung wird erreicht, daß problematische Abwässer durch einen einfachen thermischen Trennprozeß in einem geschlossenen Apparat bzw. System in drei Fraktionen zerlegt werden können , wobei die Frachten des Abwassers so aufgetrennt werden und sich in diesen Fraktionen so verteilen, daß

1) der vom Volumen her stark verminderte Destillationsrückstand in eine feste Phase überführt wird, deren Handhabung (Abfüllung in Gebinde; Transport und dergl.) wesentlich erleichtert wird und die in dieser Form sowohl in geeigneten Deponien abgelagert, in dafür zugelassenen Verbrennungsanlagen verbrannt oder aber durch alkalische Schmelze - diese Nachbehandlung wird bevorzugt - unter Zersetzung der Organohalogenverbindungen entgiftet werden kann;

2) die Destillate befreit sind von der Hauptmenge der Fracht und somit keine festen Schmutzstoffe und nichtverdampfbare Verbindungen mehr enthalten. Lediglich leichtflüchtige und wasserdampf-flüchtige organische Substanzen verbleiben im Destillat und je nach pH-Werteinstellung in anderem Verhältnisanteil, auf jeden Fall meistens jedoch in einer gegenüber der Menge in der Ausgangsfracht stark verringerten Menge; aus dem Destillat können sie durch gezielte Nachbehandlung, wie z.B. durch Aktivkohlebehandlung, entfernt werden (die Behandlung des eingesetzten Abwassers direkt mit Aktivkohle ist in der Regel bei komplex zusammengesetzten, verschmutzten Abwässern wirtschaftlich und technisch nicht durchführbar);

3) eventuell entstehende Abgase aus der Vakuumanlage oder hinter der Strippkolonne ebenfalls so behandelt werden können, daß sie wiederverwertet, verbrannt oder an einem geeigneten Absorptionsmittel abgeschieden werden.

Die Erfindung bewährt sich besonders bei den hochbelasteten und polyhalogenierte Aromaten enthaltenden Abwässern. Die Abwasserbehandlung bei Anteilen an polychlorierten Verbindungen führt demgegenüber bei der konventionellen naßchemischen und biologischen Abwasserbehandlung oder bei einer Kombination derartiger Verfahren zu dem Nachteil, daß die Organohalogenverbindungen dann in großen Mengen wasserhaltiger Schlämme, in den Absorptionsmitteln oder in dem Klärschlamm in geringer Konzentration, aber meistens in hohen Volumenmengen, angereichert sind, deren Beseitigung nur durch Deponierung in Spezialdeponien oder durch Sondermüllverbrennung erfolgen kann.

Die Erfindung schlägt auch eine Vorrichtung zur Durchführung des neuen Verfahrens vor, mit einer Einrichtung 1 zur pH-Einstellung; einer ersten Verdampfereinrichtung 7, bestehend aus einer oder mehreren Verdampferstufen mit Umlaufsystem, die einen Dampfseparator 8, einen Wärmetauscher 9 und eine Pumpe 10 zum Umwälzen des zu verdampfenden Abwassers enthalten; einer Kondensationseinrichtung 14 zum Kondensieren der Verdampfungsbrüden aus der Primärverdampfung; einer Einrichtung zum Nachbehandeln des Verdampferbrüdenkondensats; einer Einrichtung 16 zur Feststoffabscheidung, in der der Destillationsrückstand in Feststoffe und Klarlauf getrennt wird; und einer Einrichtung 17 zur Rückführung des Klarlaufs in die entsprechende Stufe der Verdampfereinrichtung 7.

Die Verdampfereinrichtung 7 ist vorzugsweise mit einer Vakuumanlage 27 verbunden.

Die Einrichtung zur Nachbehandlung des Brüdenkondensats enthält bevorzugt einen Sammelbehälter 46 für die Brüdenkondensate der einzelnen Stufen der Verdampfereinrichtung, gegebenenfalls Mittel 47 zur pH-Werteinstellung und ein Aktivkohlefilter 48 sowie zweckmäßigerweise eine Einrichtung 28 zur pH-Werteinstellung des Kondensats und eine zweite Verdampfereinrichtung 29 mit mindestens einer Verdampferstufe, bestehend aus einem Dampfseparator 30, einem Wärmetauscher 31 und einem Umwälzsystem 32, wobei diese zweite Verdampfereinrichtung 29 mit dem Wärmetauscher 9 der ersten Verdampfereinrichtung 7 über eine Leitung 33 in Verbindung steht, die die Verdampfungsbrüden in den Wärmetauscher leitet, und eine Einrichtung 34 zum Nachbehandeln des Kondensats aus dieser zweiten Verdampfereinrichtung 29 vorgesehen ist.

Vorzugsweise befindet sich zwischen der Einrichtung 1 zur pH-Werteinstellung und der Verdampfereinrichtung 7 eine Abstrippeinrichtung 36, mit einer Strippkolonne 36a, einer Dampfzuführungsleitung 37, einer Stripperdampfentnahme 38 und einer Transportleitung 39 für abgestripptes Abwasser zur Überführung in die Verdampfereinrichtung 7.

Die Einrichtung zum Nachbehandeln des Brüdenkondensats enthält bevorzugt Mittel 34 zur pH-Werteinstellung und ein Aktivkohlefilter 40.

Eine bevorzugte Ausführungsform der Vorrichtung ist dadurch gekennzeichnet, daß die Einrichtung 16 zur Feststoffabscheidung mit einer Vakuumentwässerungseinrichtung 41 verbunden und eine Leitung 42 zur Rückführung des Entwässerungsfiltrats in die entsprechende Stufe der Verdampfereinrichtung 7 vorgesehen ist. Es ist besonders zweckmäßig, die Einrichtung 16 zur Feststoffabscheidung mit einer Schmelzeinrichtung 43 zu verbinden, die Mittel 44 zum Schmelzen der Feststoffe und Mittel 45 zum Zuführen von Schmelzhilfsstoffen wie Alkalisalzen enthält.

Die einzelnen Verdampferstufen der Verdampfereinrichtungen 7 und 29 sind vorzugsweise mit Tropfenabscheidern 11 bzw. 35 ausgestattet, die so mit einer Meßeinrichtung 11a bzw. 35a gekoppelt sind, daß im Falle des Überschäumens durch den am Tropfenabscheider gebildeten Ablauf ein Signal erzeugt wird, das die automatische Zuführung von Entschäumeröl über eine Leitung 13 zu Verdampferstufe auslöst.

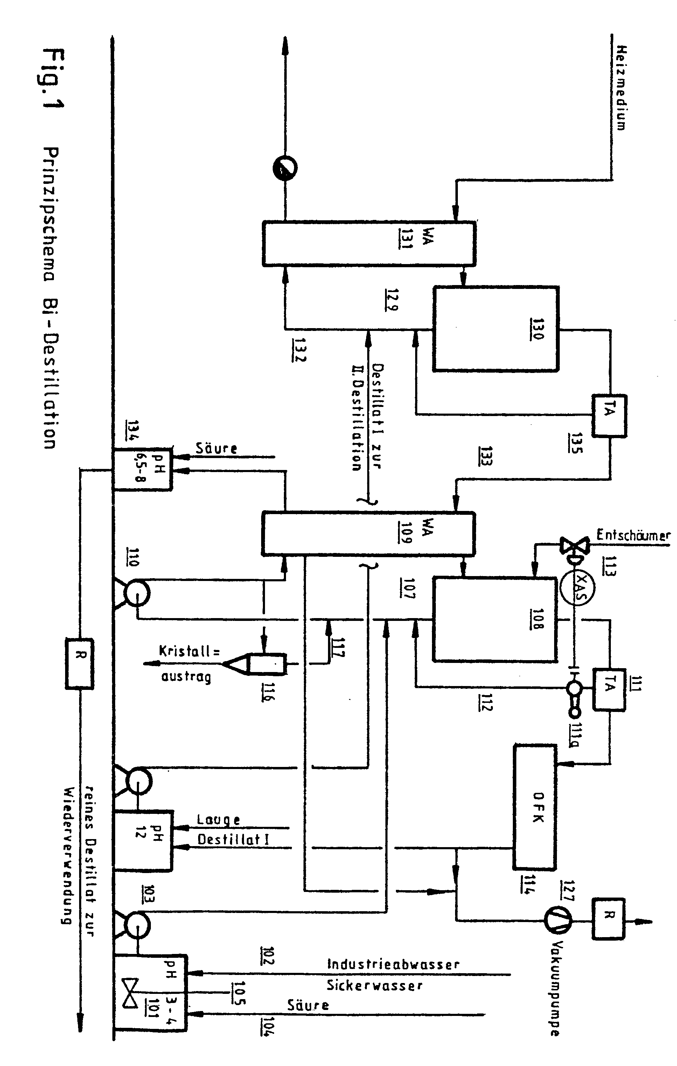

Bevorzugte Ausgestaltungen der Erfindung werden im folgenden anhand der beigefügten Zeichnungen, Figuren 1 bis 5, erläutert.

Im einzelnen zeigt

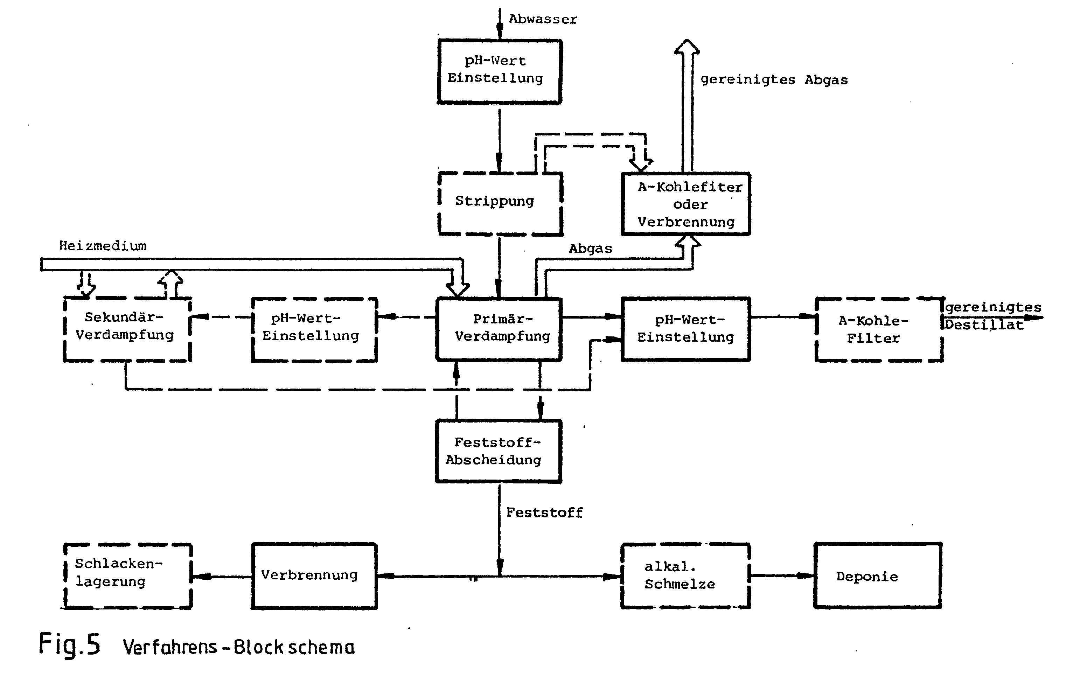

Fig. 5 ein allgemeines Prinzipschema des Verfahrens gemäß der Erfindung, wobei in diesem Schema alle wichtigen Kombinationsmöglichkeiten, wie sie auch Gegenstand der die bevorzugten Ausführungsformen betreffenden Unteransprüche sind, dargestellt sind. Selbstverständlich sind auch andere, nicht dargestellte Ausgestaltungen möglich, soweit sie unter den Schutzbereich der Ansprüche fallen.

Fig. 1 ist ein Fließbild einer Ausführungsform des Verfahrens gemäß der Erfindung, mit zunächst saurer Primär-Eindampfung des Abwassers und anschließend alkalischer Sekundär-Eindampfung des in der Primär-Eindampfung erhaltenen Destillats. Die Bezeichnungen "Primär"-Eindampfung bzw. "Sekundär-Eindampfung" stehen synonym für die erste und weitere Verdampfungseinrichtung.

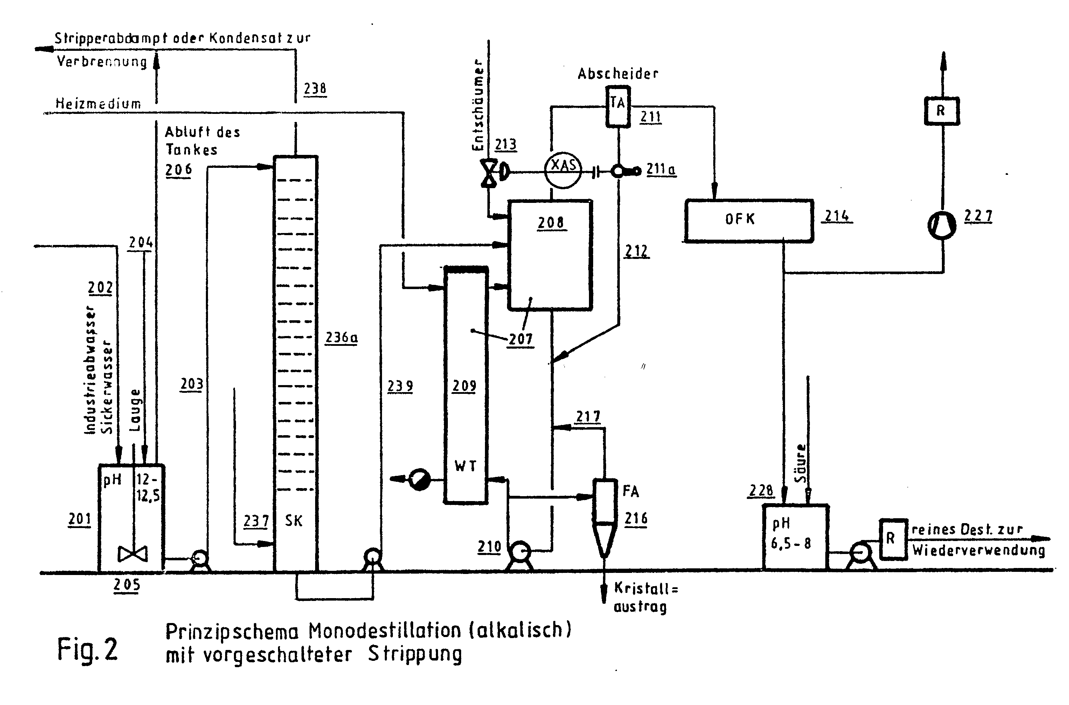

Fig. 2 ist ein Fließbild einer bevorzugten Ausführungsform des erfindungsgemäßen Verfahrens, mit alkalischer Monodestillation und vorgeschalteter Strippung.

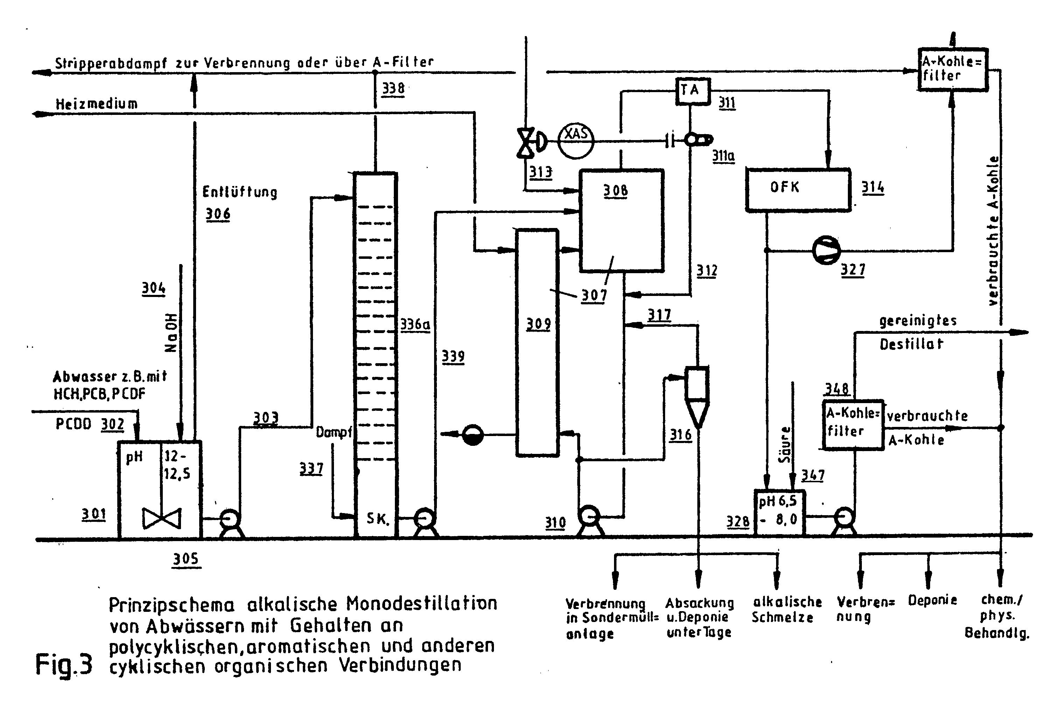

Fig. 3 ist ein Fließbild einer bevorzugten Ausführungsform des erfindungsgemäßen Verfahrens mit alkalischer Monodestillation nach vorgeschalteter Strippung, welche insbesondere bei Abwässern mit Gehalten an polycyclischen aromatischen und anderen cyclischen organischen Verbindungen angewendet wird.

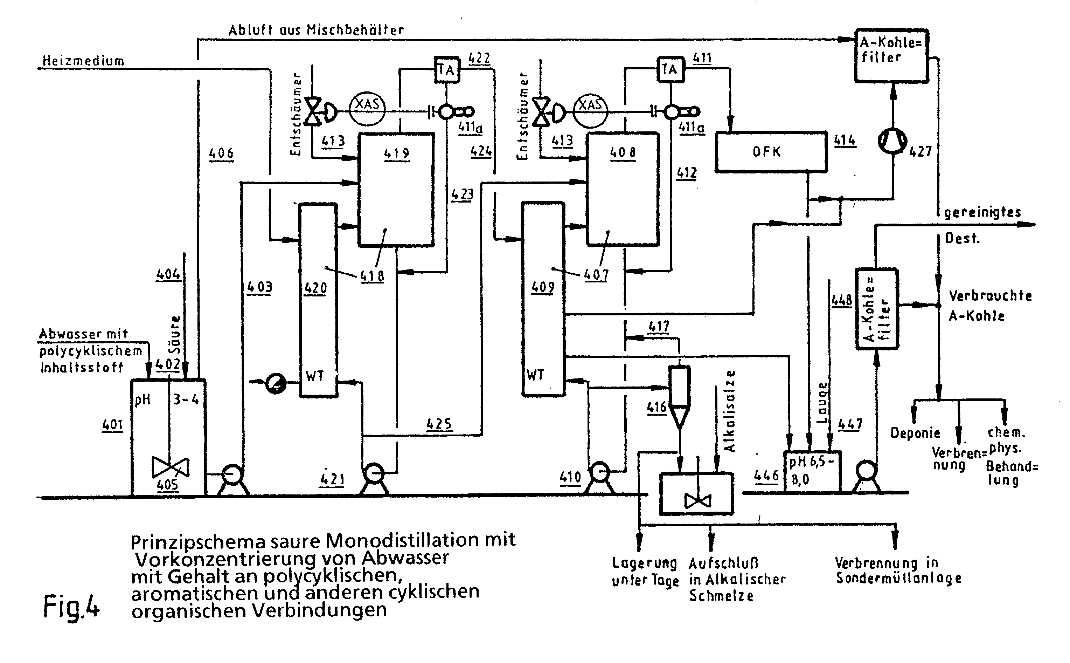

Fig. 4 ist ein Fließbild einer Ausführungsform des erfindungsgemäßen Verfahrens mit saurer Monodestillation, wobei in diesem Fall als Beispiel eine zweistufige Eindampfung als eine der möglichen Varianten zwischen ein- und x-stufiger Eindampfung dargestellt ist. Auch diese Ausführungsform wird speziell bei Abwässern mit Gehalten an polycyclischen aromatischen und anderen cyclischen organischen Verbindungen angewendet.

Bei der in Fig. 1 dargestellten Ausführungsform des erfindundungsgemäßen Verfahrens wird das Abwasser über die Abwasser-Zuleitung 102 einer Einrichtung zur pH-Werteinstellung 101 zugeführt, in der durch Zugabe von Säure (104) , unter Einsatz eines Mischorgans 105 der pH-Wert auf einen sauren Bereich und vorzugsweise auf etwa 3-4 gesenkt wird. Mit Hilfe der Abwasserpumpe 103 wird das vorbehandelte Abwasser der Verdampfereinrichtung 107 zugeführt. Die Verdampfereinrichtung 107 besteht im wesentlichen aus dem Dampfseparator 108, dem Wärmetauscher 109 und der Umwälzpumpe 110. Durch den dem Wärmetauscher 109 über die Leitung 133 zugeführten Brüdendampf von der Sekundär-Verdampfereinrichtung 129 erfolgt die Aufheizung und teilweise Verdampfung des Abwassers bei gleichzeitiger Erhöhung der Konzentration über die Sättigungsgrenze, bezogen auf mindestens einen der Inhaltsstoffe. Die Verdampfungsbrüden werden über den Tropfenabscheider 111 dem Oberflächenkondensator 114 zugeführt und hier kondensiert. Im Tropfenabscheider 111 abgeschiedene Tröpfchen werden über die Rückführleitung 112 wieder der Verdampfereinrichtung 107 zugeführt. Steigt die Menge stark an, z .B. beim Überschäumen des Dampfseparators, wird durch eine Meßsonde 111a automatisch ein Signal ausgelöst und dadurch über die Leitung 113 Entschäumer zur Zerstörung des Schaumes zudosiert. Ein Teilstrom der übersättigten und teilweise auskristallisierte Feststoffe enthaltenden Umlaufflüssigkeit wird kontinuierlich einem Feststoffabscheider 116 zugeführt, aus dem das Filtrat nach Abgabe der Feststoffe über die Leitung 117 wieder in die Verdampfereinrichtung zurückgelangt. Die ausgetragenen Feststoffe werden in geeigneten Behältnissen auf Deponie gelagert oder in anderer Weise in deponiefähige Endgüter überführt, wobei ggf. eine Nachbehandlung vorgesehen wird.

Die im Oberflächenkondensator 114 nichtkondensierbaren Gase werden von einer Vakuumpumpe 127 abgesaugt und gegebenenfalls einer Reinigungsstufe oder der Verbrennung zugeführt. Das Destillat aus dem Oberflächenkondensator 114 fließt in einen Behälter zur pH-Wert-Einstellung 128, in dem durch Zugabe von Lauge der pH-Wert angehoben wird auf einen alkalischen Bereich, vorzugsweise auf etwa 12 - 12,5. Mit diesem alkalischen pH-Wert (vorzugsweise mit pH 12-12,5) fließt das Primärdestillat der Sekundär-Verdampfungseinrichtung 129 zu, die wiederum aus einem Dampfseparator 130 mit Heizkörper 131 und Umwälzleitung 132 besteht. Auf eine Umwälzpumpe analog 110 wird in vielen Fällen wegen der relativ großen Reinheit des Destillats verzichtet. Die Brüden werden ebenfalls über einen Tropfenabscheider 135 geleitet und durch die Verbindungsleitung 133 dem Heizkörper 109 der Primär-Verdampfereinrichtung zugeführt, wo sie unter Abgabe ihrer Verdampfungswärme kondensieren. Das so erhaltene Destillat II fließt einem weiteren Behälter 134 zur pH-Einstellung zu, in dem durch Zugabe von Säure der pH-Wert beispielsweise auf einen Wert von 6,5 bis 8 abgesenkt wird. Von hier kann das Destillat dem Vorfluter oder einer Wiederverwendung als Betriebswasser zugeführt werden, wobei je nach Anforderung an die Qualität gegebenenfalls noch eine Reinigungsstufe, z.B. ein A-Kohlefilter nachgeschaltet werden kann. Letzteres ist bei Abwässern notwendig, die Verunreinigungen mit toxischen Verbindungen, insbesondere den polyhalogenierten aromatischen cyclischen Verbindungen enthalten.

Bei der in Fig. 2 dargestellten bevorzugten Ausführungsform des erfindungsgemäßen Verfahrens wird das Abwasser über die Abwasserzuleitung 202 einem Behälter zur pH-Werteinstellung 201 zugeführt, in dem durch Zugabe von Lauge über 204, unter Einsatz eines Mischorgans 205, der pH-Wert auf einen alkalischen Bereich, bevorzugt einen pH-Wertbereich von etwa 12 bis 12,5, angehoben wird. Mit Hilfe der Abwasserpumpe 203 wird das vorbehandelte Abwasser der Strippkolonne 236a zugeführt, in der durch Zugabe von Dampf über 237 flüchtige Bestandteile, wie insbesondere Ammoniak, ausgetrieben werden.

Über die Verbindungsleitung 238 wird der ausgetriebene Dampf zusammen mit der Abluft 206 aus dem Behälter zur pH-Wert-Einstellung einer Verbrennung oder Nachbehandlung zugeführt. Es ist möglich, je nach Anteil des NH$_3$ eine gezielte Weiterverarbeitung anzuschließen. Das gestrippte Abwasser gelangt über die Verbindungsleitung 239 zur Verdampfereinrichtung 207, die aus dem Dampfseparator 208, dem Wärmeaustauscher 209 und der Umwälzpumpe 210 besteht. Die durch indirekte Beheizung erzeugten Verdampfungsbrüden werden über den Tropfenabscheider 211 dem Oberflächenkondensator 214 zugeführt und hier kondensiert. Im Tropfenabscheider 211 abgeschiedene Tröpfchen werden über die Rückführleitung 212 wieder der Verdampfereinrichtung 207 zugeführt. Steigt die Menge stark an, z.B. beim Überschäumen des Dampfseparators 208, wird durch die Meßsonde 211a ein Signal ausgelöst und dadurch über die Leitung 213 automatisch Entschäumer zur Zerstörung des Schaums zudosiert. Ein Teilstrom der übersättigten und ggf. auskristallisierten, Feststoffe enthaltenden Umlaufflüssigkeit wird kontinuierlich dem Feststoffabscheider 216 zugeführt, aus dem das Filtrat nach Abgabe des Feststoffs über die Leitung 217 wieder in die Verdampfereinrichtung 207 zurückgeleitet wird. Die ausgetragenen Feststoffe werden in geeigneten Behältnissen auf Deponie gelagert und/oder nachbehandelt und in ein deponiefähiges Gut überführt. Die im Oberflächenkondensator 214 nichtkondensierten Gase werden von einer Vakuumpumpe 227 abgesaugt und gegebenenfalls einer Reinigungsstufe oder Verbrennung zugeführt. Das Destillat aus dem Oberflächenkondensator 214 fließt in einen Behälter zur pH-Wert-Einstellung 228, in dem durch Zugabe von Säure der pH-Wert auf einen neutralen Bereich, vorzugsweise auf etwa 6,5 bis 8 abgesenkt wird. Von hier kann das Destillatdem Vorfluter oder einer Wiederverwendung als Betriebswasser zugeführt werden, wobei je nach Anforderung an die Qualität gegebenenfalls noch eine Reinigungsstufe, beispielsweise mit einem A-Kohlefilter nachgeschaltet werden kann.

Bei der in Fig. 3 dargestellten bevorzugten Ausführungsform des erfindungsgemäßen Verfahrens wird das mit polychlorierten Inhaltsstoffen belastete Abwasser über eine Zuführleitung 302 einem Behälter zur pH-Wert-Einstellung zugeführt, in dem durch Zugabe von Lauge 304 unter Einsatz eines Mischorgans 305 der pH-Wert angehoben wird auf einen alkalischen Bereich, vorzugsweise auf etwa 12 bis 12,5. Mit Hilfe der Abwasserpumpe 303 wird das vorbehandelte Abwasser der Strippkolonne 336a zugeführt, in der durch Zugabe von Dampf über Leitung 337 mitgeführte flüchtige Bestandteile ausgetrieben werden. Diese werden über die Leitung 338 gemeinsam mit der Abluft aus dem Behälter zur pH-Wert-Einstellung über Leitung 306 einer Verbrennung oder Nachbehandlung oder beidem zugeführt. Über die Verbindungsleitung 339 gelangt das gestrippte Abwasser anschließend in die Verdampfereinrichtung 307, die aus dem Dampfseparator 308, dem Wärmetauscher 309 und der Umwälzpumpe 310 besteht. Die durch indirekte Beheizung erzeugten Verdampfungsbrüden werden über den Tropfenabscheider 311 geleitet und dem Oberflächenkondensator 314 zugeführt, in dem die Kondensation erfolgt. Im Tropfenabscheider 311 abgeschiedene Tröpfchen werden über die Rückführleitung 312 wieder der Verdampfereinrichtung 307 zugeführt. Steigt die Rückführmenge, z.B. infolge Überschäumens des Dampfseparators 308, stark an, wird durch die Meßsonde 311a ein Signal ausgelöst und dadurch über die Leitung 313 automatisch Entschäumer zur Zerstörung des Schaums zudosiert. Aus der Verdampfereinrichtung 307 wird ein Teilstrom der übersättigten und meistens feststoffhaltigen Umlaufflüssigkeit kontinuierlich dem Feststoffabscheider 316 zugeführt, aus dem das Filtrat nach Abgabe des Feststoffs über die Leitung 317 wieder in die Verdampfereinrichtung zurückgelangt.

Der ausgetragene Feststoff wird entweder einer Sondermüllverbrennung oder Untertagedeponie zugeführt, vorzugsweise aber in geeigneten Autoklaven in eine Schmelze überführt, wobei sich infolge des alkalischen Milieus die enthaltenen Schadstoffe, wie polychlorierte Verbindungen, zersetzen.

Die im Oberflächenkondensator 314 nichtkondensierten Gase werden von einer Vakuumpumpe 327 abgesaugt und gemeinsam mit dem Stripperabdampf 338 und der Abluft vom Behälter zur pH-Wert-Einstellung 306 einem Aktivkohlefilter oder einer Verbrennungsanlage zugeführt. Das Destillat aus dem Oberflächenkondensator 214 fließt in einen Behälter zur pH-Wert-Einstellung 328, in dem durch Zugabe von Säure (347) der pH-Wert abgesenkt wird auf einen neutralen Bereich, vorzugsweise auf etwa 6,5 bis 8,0. In einem nachgeschalteten Aktivkohlefilter 348 werden eventuell noch im Destillat enthaltene Spuren von Schadstoffen entfernt, bevor das gereinigte Destillat die Anlage verläßt. Die verbrauchte Aktivkohle von der Abluft- und der Destillatreinigung kann vorzugsweise in einer Sondermüllverbrennung problemlos verbrannt oder aber auf Deponie gelagert oder chemisch-physikalisch behandelt werden.

Bei der in Fig. 4 dargestellten Ausführungsform des erfindungsgemäßen Verfahrens wird das mit polychlorierten Inhaltsstoffen belastete Abwasser über die Zuführleitung 402 dem Behälter zur pH-Wert-Einstellung 401 zugeführt, in dem durch Zugabe von Säure über 404 unter Einsatz eines Mischorgans 405 der pH-Wert auf einen sauren Bereich, vorzugsweise auf etwa 3 bis 4, abgesenkt wird. Mit Hilfe der Abwasserpumpe 403 wird das vorbehandelte Abwasser der Vorkonzentrierstufe 418 zugeführt. Die Vorkonzentrierstufe 418 besteht aus dem Dampfseparator 419, dem Wärmeaustauscher 420 und der Umwälzpumpe 421. Durch indirekte Beheizung über den Wärmetauscher 420 erfolgt die Verdampfung eines Teils des im Abwasser enthaltenen Wassers und die gebildeten Verdampfungsbrüden werden über den Tropfenabscheider 422 und die Leitung 424 dem Wärmetauscher 409 der nachgeschalteten Verdampferstufe 407 zugeführt. In der Rückführleitung 423 vom Tropfenabscheider 422 zur Vorkonzentrierstufe 418 ist wiederum eine Meßsonde 411a installiert, die bei übermäßigem Flüssigkeitsabfluß, wie es beim Überschäumen des Dampfseparators 419 verursacht wird, ein Signal auslöst, durch welches über die Leitung 413 Entschäumer zur Zerstörung des Schaums automatisch zudosiert wird.

Aus der Vorkonzentrierstufe 418 gelangt das vorkonzentrierte Abwasser über die Leitung 425 in die Verdampferstufe 407, die analog der ersten Stufe aus Dampfseparator 408, Wärmetauscher 409 und Umwälzpumpe 410 besteht. Durch die mit den Brüden von der Vorkonzentrierstufe 418 zugeführte Wärme wird das Abwasser in dieser Stufe über die Sättigungsgrenze mindestens eines oder mehrerer Inhaltsstoffe bzw. einer Gruppe von Inhaltsstoffen weiter eingedampft, so daß Feststoffe auskristallisieren können. Die Verdampfungsbrüden werden über den Tropfenabscheider 411 dem Oberflächenkondensator 414 zugeleitet und dort kondensiert. Mit Hilfe der in der Rückführleitung 412 vom Tropfenabscheider zur Verdampferstufe angeordneten Meßsonde 411a wird analog Stufe I im Bedarfsfall eine automatische Schaumzerstörung bewirkt. Aus der Umlaufflüssigkeit der Verdampferstufe 407 wird ein Teilstrom kontinuierlich abgezogen und dem Feststoffabscheider 416 zugeführt, durch welchen die Feststoffe ausgeschleust werden. Das Filtrat gelangt über die Leitung 417 in die Verdampferstufe zurück. Der abgeschiedene Feststoff wird entweder einer Untertage-Deponie, einer Sondermüllverbrennung oder -vorzugsweise- nach Zumischung von Alkalisalzen zur Einstellung eines alkalischen Milieus in alkalischer Schmelze aufgeschlossen.

Die nichtkondensierten Gase von dem Oberflächenkondensator sowie vom brüdenbeheizten Wärmetauscher 409 der zweiten Stufe werden mitHilfe von Vakuumpumpe 427 abgesaugt und gemeinsam mit der Abluft 406 aus dem Behälter zur pH-Wert-Einstellung 401 einem Aktivkohlefilter oder einer Verbrennungsanlage zugeführt. Im Behälter zur pH-Wert-Einstellung 446 werden die Brüdenkondensate vom Wärmeaustauscher 409 und von dem Oberflächenkondensator 414 gemeinsam durch Laugezugabe auf einen pH-Wert im neutralen Bereich, vorzugsweise auf einen pH-Wert von etwa 6,5 bis 8,0 eingestellt. Anschließend wird das Brüdenkondensat in einem Aktivkohlefilter 448 nachgereinigt, bevor es die Anlage verläßt.

Die in dem in Fig. 4 gezeigten Beispiel beschriebene zweistufige Ausführung kann entsprechend auch für die in den Fig. 1 bis 3 beschriebenen Ausführungsformen angewendet werden bzw. auch noch jeweils um weitere Stufen ergänzt werden, wenn dies aus wärmewirtschaftlichen Gründen sinnvoll ist.

In den Fig. 1 bis 4 sind Teile gleicher Funktion, die nicht notwendigerweise auch von identischer Bauart sein brauchen, durch übereinstimmende Endziffern kleiner 100 gekennzeichnet. So bezeichnet beispielsweise 107 die Verdampfereinrichtung der Fig. 1 und 307 die Verdampfereinrichtung von Fig. 3.

Die folgende Bezugszeichenliste erläutert die einzelnen Teile der Vorrichtung. Diese Liste ist Teil der vorliegenden Beschreibung.

Bezugszeichen-Liste

| lf. Nr. | Komponente |
|---------|------------|
| 1 | Einrichtung zur pH-Werteinstellung |
| 2 | Abwasser-Zuleitung |
| 3 | Abwasser-Pumpe |
| 4 | Säure- bzw. Laugenzuleitung |
| 5 | Mischorgan zur pH-Werteinstellung |
| 6 | Tankentlüftungsleitung |
| 7 | Verdampfereinrichtung |
| 8 | Dampfseparator von (7) |
| 9 | Wärmetauscher von (7) |
| 1o | Umwälzpumpe von (7) |
| 11 | Tröpfchenabscheider zu (7) |
| 11a | Meßsonde |
| 12 | Rückführleitung für Tröpfchen in die Verdampfereinrichtung (7) |
| 13 | Leitung zum Zudosieren von Entschäumer |
| 14 | Kondensatoreinrichtung |
| 16 | Feststoffabscheider |
| 17 | Klarlaufrückführleitung |
| 18 | Vorkonzentriereinrichtung |
| 19 | Vorkonzentrierdestillator, Dampfseparator von (18) |
| 2o | Vorkonzentrier-Wärmetauscher von (18) |
| 21 | Umwälzpumpe von (18) |
| 22 | Tröpfchenabscheider von (18) |
| 23 | Rückführleitung für Tröpfchen in (18) |
| 24 | Transportleitung für Verdampfungsbrüden in den Wärmetauscher (9) |
| 25 | Transportleitung für vorkonzentriertes Abwasser in Verdampfereinrichtung (7) |

| lf. Nr. | Komponente |
|---|---|
| 27 | Mittel zum Anlegen eines Vakuums an Verdampfereinrichtung (7) |
| 28 | Einrichtung zur pH-Werteinstellung des Brüdenkondensats |
| 29 | Sekundär-Verdampfereinrichtung |
| 30 | Dampfseparator von (29) |
| 31 | Wärmetauscher von (29) |
| 32 | Umwälzsystem von (29) |
| 33 | Verbindungsleitung zwischen (29) und (9) zum Transport der Verdampfungsbrüden aus (29) |
| 34 | Einrichtung zur Nachbehandlung des Wärmetauscherkondensats |
| 35 | Tröpfchenabscheider von (29) |
| 36 | Einrichtung zum Abstrippen |
| 36a | Strippkolonne |
| 37 | Dampfzuführleitung am Boden der Strippkolonne |
| 38 | Stripperabdampfentnahmeleitung |
| 39 | Transportleitung für abgestripptes Abwasser zur Verdampfereinrichtung (7) |
| 41 | Vakuumentwässerungseinrichtung |
| 42 | Rückführleitung für das Entwässerungsfiltrat nach (7) |
| 43 | Schmelzeinrichtung |
| 44 | Mittel zum Schmelzen der Feststoffabscheidung |
| 45 | Mittel zum Zuführen der Schmelzhilfsstoffe wie Alkalisalze |
| 46 | Sammelbehälter für Brüdenkondensat und Wärmetauscherkondensat |
| 47 | Mittel zur pH-Werteinstellung in (46) bzw. (28) |
| 48 | Aktivkohlefilter zur Absorption von organischer Fracht aus Brüdenkondensat |

**Patentansprüche**

1. Verfahren zum Abtrennen der komplex zusammengesetzten Fracht aus organischen und anorganischen Inhaltsstoffen von gelöste Feststoffe enthaltenden, flüssigen Abfällen, wie Industrieabwässern und Deponiesickerwässern, durch destillative Behandlung, dadurch gekennzeichnet, daß

das Abwasser nach Einstellen des pH-Wertes auf einen sauren oder alkalischen Bereich in einer Primärverdampferstufe destillativ so in Verdampfungsbrüden und einen Destillationsrückstand aufgetrennt wird,
daß mindestens ein Teil der flüchtigen Fracht mit den Brüden abdestilliert
und der Destillationsrückstand in Bezug auf mindestens einen der Inhaltsstoffe übersättigt ist;

EP 0 176 963 B1

die Verdampfungsbrüden in einem Kondensator kondensiert und nachbehandelt werden, um die mitgeführte Fracht so weit abzutrennen, daß die Wasserphase einem Vorfluter oder einer Kläranlage zugeleitet werden kann;
und gegebenenfalls das Kondensat der Primärverdampfung vor der Nachbehandlung auf einen anderen pH-Wertbereich eingestellt und einer Sekundärverdampfung zugeleitet wird;

der übersättigte Destillationsrückstand mindestens teilweise aus der Verdampferstufe abgezogen und einer Feststoffabscheidung unterworfen wird;

und der von Feststoffen befreite Klarlauf in die Primärverdampferstufe zurückgeleitet wird.

2. Verfahren nach Anspruch 1, dadurach gekennzeichnet, daß als flüssige Abfälle Sonderabfälle oder Teile derselben behandelt werden, die Gehalte an polychlorierten ein- oder mehrkernigen aromatischen und/oder anderen cyclischen Verbindungen enthalten.

3. Verfahren nach Anspruch 1 oder 2, dadurch gekennzeichnet, daß die flüssigen Abfälle organische Verbindungen aus der Gruppe der Hexachlorcyclohexane, polychlorierten Biphenyle, polychlorierten Dibenzofurane, polychlorierten Dibenzodioxine und/oder Chlorphenolderivate enthalten.

4. Verfahren nach einem der Ansprüche 1 bis 3, dadurch gekennzeichnet, daß die destillative Auftrennung unter Anwendung von unteratmosphärischem Druck, vorzugsweise bei weniger als etwa 120mbar, erfolgt.

5. Vefahren nach einem der Ansprüche 1 bis 4, dadurch gekennzeichnet, daß das destillativ aufzutrennende Abwasser bei einem pH-Wert im Bereich von etwa 3,0 bis 3,5 gehalten wird.

6. Verfahren nach einem der Ansprüche 1 bis 4, dadurch gekennzeichnet, daß das destillativ aufzutrennende Abwasser bei einem pH-Wert im Bereich von etwa 12,0 bis 12,5 gehalten wird.

7. Verfahren nach einem der Ansprüche 1 bis 6, dadurch gekennzeichnet, daß das Brüdenkondensat über ein Aktivkohlefilter geleitet und zumindest teilweise von organischer Fracht befreit wird.

8. Verfahren nach einem der Ansprüche 1 bis 7, dadurch gekennzeichnet, daß das Brüdenkondensat vor dessen Nachbehandlung auf einen pH-Wert im Bereich von etwa 6 bis 8 eingestellt wird.

9. Verfahren nach einem der Ansprüche 1 bis 8, dadurch gekennzeichnet, daß das Brüdenkondensat aus der Primärverdampfung auf einen pH-Wert im Bereich von etwa 12,0 bis 12,5 eingestellt und nachbehandelt wird.

10. Verfahren nach einem der Ansprüche 1 bis 9, dadurch gekennzeichnet, daß die Primär- und die Sekundärverdampfung wärmeflußmäßig hintereinandergeschaltet werden.

11. Verfahren nach einem der Ansprüche 1 bis 10, dadurch gekennzeichnet, daß das Kondensat aus der Sekundärverdampfung auf einen pH-Wert von etwa 6 bis 8 eingestellt und nachbehandelt wird.

12. Verfahren nach einem der Ansprüche 1 bis 11, dadurch gekennzeichnet, daß der Verdampferstufe, insbesondere der Primärverdampfung, ein Entschäumeröl zudosiert und gegebenenfalls das durch Überschäumen übergehende Produkt abgetrennt, vorzugsweise in die Verdampferstufe zurückgeleitet wird.

13. Verfahren nach einem der Ansprüche 1 bis 12, dadurch gekennzeichnet, daß das Abwasser vor dem Eintritt in die Verdampferstufe in einer vorgeschalteten Strippkolonne alkalisch abgestrippt wird.

14. Verfahren nach Anspruchs 13, dadurch gekennzeichnet, daß die am Strippkolonnenkopf austretenden Dämpfe nachbehandelt werden.

15. Verfahren nach einem der Ansprüche 1 bis 14, dadurch gekennzeichnet, daß das der Verdampferstufe zugeführte Abwasser in mindestens einer Vorkonzentrierstufe vorkonzentriert wird und die in der

12

Vorkonzentrierstufe erhaltenen Brüden zum Beheizen der nachfolgenden Stufe verwendet werden.

16. Verfahren nach einem der Ansprüche 1 bis 15, dadurch gekennzeichnet, daß der abgeschiedene Feststoff, vorzugsweise im Vakuum, weiter entwässert und das Entwässerungsfiltrat wieder in die Verdampferstufe zurückgeleitet wird.

17. Verfahren nach einem der Ansprüche 1 bis 16, dadurch gekennzeichnet, daß der abgeschiedene Feststoff zusammen mit Alkalisalzen erschmolzen, zersetzt und hierdurch in ein deponiefähiges und transportfähiges Endgut überführt wird.

18. Verfahren nach einem der Ansprüche 4 bis 17, dadurch gekennzeichnet, daß die Abluft der Vakuumeinrichtungen bei destillativer Auftrennung unter unteratmosphärischem Druck nachbehandelt wird.

19. Vorrichtung zur Durchführung des Verfahrens nach Anspruch 1, mit

einer Einrichtung zur pH-Werteinstellung (1);

einer Verdampfereinrichtung,

bestehend aus einer Primärverdampferstufe (7) und gegebenenfalls einer oder mehreren Sekundärverdampferstufen, jeweils mit Umlaufsystem, das einen Dampfseparator, einen Wärmeaustauscher und eine Pumpe zum Umwälzen des zu verdampfenden Abwassers enthält;

einer Kondensationseinrichtung (14) zum Kondensieren der Verdampfungsbrüden aus der Primärverdampfung;

einer Einrichtung zum Nachbehandeln des Verdampferbrüdenkondensats;

einer Einrichtung (16) zur Feststoffabscheidung, in der der Destillationsrückstand in Feststoffe und Klarlauf getrennt wird;

und einer Einrichtung (17) zur Rückführung des Klarlaufes in den Primärverdampfer (7).

20. Vorrichtung nach Anspruch 19, dadurch gekennzeichnet, daß die Verdampfereinrichtung (7) mit einer Vakuumanlage (27) verbunden ist.

21. Vorrichtung nach Anspruchs 19 oder 20, dadurch gekennzeichnet, daß die Einrichtung zur Nachbehandlung des Brüdenkondensats einen Sammelbehälter (46) für die Brüdenkondensate der einzelnen Stufen der Verdampfereinrichtung, gegebenenfalls Mittel (47) zur pH-Werteinstellung und ein Aktivkohlefilter (48) enthält.

22. Vorrichtung nach einem der Ansprüche 19 bis 21, dadurch gekennzeichnet, daß die Einrichtung zum Nachbehandeln des Brüdenkondensats eine Einrichtung (28) zur pH-Werteinstellung des Kondensats und eine zweite Verdampfereinrichtung (29) mit mindestens einer Verdampferstufe, bestehend aus einem Dampfseparator (30), einem Wärmetauscher (31) und einem Umwälzsystem (32), enthält und diese zweite Verdampfereinrichtung (29) mit dem Wärmetauscher (9) der ersten Verdampfereinrichtung (7) über eine Leitung (33) in Verbindung steht, die die Verdampfungsbrüden in den Wärmetauscher leitet, und eine Einrichtung (34) zum Nachbehandeln des Kondensats aus dieser zweiten Verdampfereinrichtung (29) vorgesehen ist.

23. Vorrichtung nach einem der Ansprüche 19 bis 22, dadurch gekennzeichnet, daß sich zwischen der Einrichtung (1) zur pH-Werteinstellung und der Verdampfereinrichtung (7) eine Abstrippeinrichtung (36) befindet, mit einer Strippkolonne (36a), einer Dampfzuführungsleitung (37), einer Stripperdampfentnahme (38) und einer Transportleitung (39) für abgestripptes Abwasser zur Überführung in die Verdampfereinrichtung (7).

24. Vorrichtung nach einem der Ansprüche 19 bis 23, dadurch gekennzeichnet, daß die Einrichtung zum Nachbehandeln des Brüdenkondensats Mittel zur pH-Werteinstellung (34) und ein Aktivkohlefilter (40)

13

enthält.

25. Vorrichtung nach einem der Ansprüche 19 bis 24, dadurch gekennzeichnet, daß die Einrichtung (16) zur Feststoffabscheidung mit einer Vakuumentwässerungseinrichtung (41) verbunden ist und eine Leitung (42) zur Rückführung des Entwässerungsfiltrats in den Primär Verdampfer (7) vorgesehen ist.

26. Vorrichtung nach einem der Ansprüche 20 bis 26, dadurch gekennzeichnet, daß die Einrichtung (16) zur Feststoffabscheidung mit einer Schmelzeinrichtung (43) verbunden ist, die Mittel (44) zum Schmelzen der Feststoffe und Mittel (45) zum Zuführen von Schmelzhilfsstoffen wie Alkalisalzen enthält.

27. Vorrichtung nach einem der Ansprüche 19 bis 27, dadurch gekennzeichnet, daß die einzelnen Verdampferstufen der Verdampfereinrichtungen (7,29) mit Tropfenabscheidern (11,35) ausgestattet sind, die so mit einer Meßeinrichtung (11a, 35a) gekoppelt sind, daß im Falle des Überschäumens durch den am Tropfenabscheider gebildeten Ablauf ein Signal erzeugt wird, das die automatische Zuführung von Entschäumeröl über eine Leitung (13) zur Verdampferstufe auslöst.

**Claims**

1. A process of separating the complexly composed load made up of organic and inorganic component materials from liquid wastes containing dissolved solids, such as industrial waste waters and sanitary landfill leachates, by distillation treatment, characterized
   by adjusting the waste water pH level to an acid or alkali range and then separating the waste water by distillation in a primary evaporator stage into evaporation vapours and a distillation residue such that
   at least a portion of said volatile load is distilled off together with the vapours and
   the distillation residue is supersaturated with respect to at least one of said component materials;
   by condensing and post-treating the evaporation vapours in a condenser so as to separate the dragged-along load to the point where the water phase may be passed on to a drainage canal or to a clarification system; and by optionally adjusting the primary evaporation condensate to another pH range prior to post-treatment and passing it on to a secondary evaporator;
   by withdrawing at least part of the supersaturated distillation residue from the evaporator stage and subjecting it to a solids separation treatment; and
   by returning the liquid cleared of the solids to the primary evaporator stage.

2. A process as in claim 1, characterized in that the liquid wastes to be treated are hazardous wastes or parts thereof which contain amounts of polychlorinated mono- or polycyclic aromatic and/or other cyclic compounds.

3. A process as in claim 1 or 2, characterized in that the liquid wastes contain organic compounds from the group comprising hexachlorocyclohexanes, polychlorinated biphenyls, polychlorinated dibenzofurans, polychlorinated dibenzodioxines and/or chlorophenol derivatives.

4. A process as in any one of claims 1 to 3, characterized by performing the distillative separation under application of subatmospheric pressure, preferably of less than approx. 120 mbar.

5. A process as in any one of claims 1 to 4, characterized by maintaining the waste to be separated by distillation at a pH level in the range of approx. 3.0 to 3.5.

6. A process as in any one of claims 1 to 4, characterized by maintaining the waste to be separated by distillation at a pH level in the range of approx. 12.0 to 12.5.

7. A process as in any one of claims 1 to 6, characterized by passing the vapour condensate over an active coal filter and clearing it at leastly partly of its organic load.

8. A process as in any one of claims 1 to 7, characterized by adjusting the pH level of the vapour condensate to a range of approx. 6 to 8 prior to the post-treatment thereof.

9. A process as in any one of claims 1 to 8, characterized by adjusting the pH level of the primary evaporation vapour condensate to a range of approx. 12.0 to 12.5 and post-treating it.

10. A process as in any one of claims 1 to 9, characterized by performing the primary and secondary evaporations one after the other in respect to thermal flow.

11. A process as in any one of claims 1 to 10, characterized by adjusting the pH level of the secondary evaporation condensate to approx. 6 to 8 and post-treating it.

12. A process as in any one of claims 1 to 11, characterized by metering an antifoaming oil into the evaporator stage, particularly the primary evaporator stage, and by optionally separating and preferably returning to the evaporator stage the product going over by overfoaming.

13. A process as in any one of claims 1 to 12, characterized by alkali stripping the waste water in a stripper column prior to its entry in the evaporator stage.

14. A process as in claim 13, characterized by post-treating the vapours discharged at the head of the stripper column.

15. A process as in any one of claims 1 to 14, characterized by pre-concentrating the waste water fed to the evaporator stage in at least one pre-concentrating stage and by using the vapours obtained in the pre-concentrating stage for heating the subsequent stage.

16. A process as in any one of claims 1 to 15, characterized by further dehydrating the separated solid material, preferably in vacuum, and by returning the dehydration filtrate to the evaporator stage.

17. A process as in any one of claims 1 to 16, characterized by melting the separated solid material together with alkali salts, decomposing it and thus converting it into a disposable and transportable final product.

18. A process as in any one of claims 4 to 17, characterized by post-treating the air exhausted from the vacuum equipment in the distillative separation at subatmospheric pressure.

19. Apparatus for practicing the process of claim 1, comprising
pH adjusting means (1);
evaporator means,
comprising a primary evaporator stage (7) and one or several optional secondary evaporator stages, each with a recycling system containing a steam separator, a heat exchanger and a pump for recirculating the waste to be evaporated;
condensing means (14) for condensing the primary evaporation vapours;
means for post-treating the evaporator vapour condensate;
solids separation means (16) for separating the distillation residue into solids and cleared liquid; and
means (17) for returning the cleared liquid to primary evaporator (7).

20. Apparatus as in claim 19, characterized by evaporator means (7) being connected to a vacuum system (27).

21. Apparatus as in claim 19 or 20, characterized by the vapour condensate post-treating means comprising a container (46) for collecting the vapour condensates from the individual stages of the evaporator means, optional pH adjusting means (47), and an active coal filter (48).

22. Apparatus as in any one of claims 19 to 21, characterized by the vapour condensate post-treating means including means (28) for adjusting the pH level of the condensate and by second evaporator means (29) comprising at least one evaporator stage, consisting of a vapour separator (30), a heat exchanger (31) and a recirculating system (32), said second evaporator means (29) being connected to heat exchanger (9) of first evaporator means (7) through a line (33) for conducting the evaporator vapours into the heat exchanger, and means (34) for post-treating the condensate from said second evaporator means (29).

EP 0 176 963 B1

**23.** Apparatus as in any one of claims 19 to 22, characterized by stripping means (36) disposed between pH adjusting means (1) and evaporator means (7), said stripping means comprising a stripping column (36a), vapour feedline (37), and stripper vapour discharge (38) and a transport line (39) for conducting stripped waste water to evaporator means (7).

**24.** Apparatus as in any one of claims 19 to 23, characterized by said vapour condensate post-treating means comprising pH adjusting means (34) and an active coal filter (40).

**25.** Apparatus as in any one of claims 19 to 24, characterized by solid separating means (16) being connected to vacuum dehydrating means (41), and by a line (42) being provided for returning the dehydration filtrate to primary evaporator (7).

**26.** Apparatus as in any one of claims 20 to 26, characterized by solids separating means (16) being connected with melting means (43) comprising means (44) for melting said solids and means (45) for feeding in melt-promoting materials such as alkali salts.

**27.** Apparatus as in any one of claims 19 to 27, characterized by the individual evaporator stages of evaporating means (7, 29) being equipped with drop separators (11, 35) coupled to measuring means (11a, 35a) in such a manner that the discharge formed at the drop separator in the case of overfoaming causes a signal to be generated which triggers the automatic feeding of antifoaming oil to the evaporator stage through a line (13).

**Revendications**

**1.** Procédé pour la séparation de la charge à composition complexe, constituées par des substances inorganiques provenant de résidus liquides qui contiennent des matières solides dissoutes, tels que des eaux résiduaires d'origine industrielle, ainsi que des eaux d'infiltration provenant de dépôts de déchets, en la traitant par voie de distillation, **caractérisé en ce que**

après avoir réglé le pH dans un domaine acide ou alcalin,
on sépare les eaux résiduaires par voie de distillation au cours d'une étape d'évaporation primaire, en vapeurs provenant de l'évaporation et en un résidu de distillation,
de telle sorte qu'au moins, une partie de la charge volatile se sépare par distillation avec les vapeurs et que le résidu de distillation soit sursaturé quant à, au moins, un des constituants ;

on condense dans un condensateur et on traite ultérieurement les vapeurs qui proviennent de l'évaporation
afin de séparer la charge entraînée dans une mesure telle que l'on puisse acheminer la phase aqueuse à un collecteur ou à une station d'épuration ;
et **en ce qu**'éventuellement, avant de procéder au traitement ultérieur, on règle le condensat de l'évaporation primaire à un domaine de pH différent et on l'achemine à une évaporation secondaire ;
au moins partiellement, on retire de l'étape d'évaporation le résidu sursaturé de distillation et on le soumet à une précipitation des matières solides;

et on renvoie le courant clair libéré des matières solides à l'étape d'évaporation primaire.

**2.** Procédé selon la revendication 1, **caractérisé en ce que,** comme résidus liquides, on traite des résidus particuliers ou des éléments de ces derniers, qui possèdent des teneurs en composés aromatiques et/ou en autres composés cycliques mono- ou polynucléaires polychlorés.

**3.** Procédé selon la revendication 1 ou 2, **caractérisé en ce que les** résidus liquides contiennent des composés organiques faisant partie du groupe des hexachlorocyclohexanes, des biphénylpolychlorés, des dibenzofurannes polychlorés, des dibenzodioxines polychlorées et/ou des dérivés du chlorophénol.

**4.** Procédé selon l'une quelconque des revendications 1 à 3, **caractérisé en ce que** la séparation par voie de distillation a lieu avec application d'une pression sous-atmosphérique, de préférence sous une pression inférieure à environ 120 mbar.

16

5. Procédé selon l'une quelconque des revendications 1 à 4, **caractérisé en ce qu'**on maintient les eaux résiduaires à séparer par voie de distillation dans un domaine de pH allant d'environ 3,0 à 3,5.

6. Procédé selon l'une quelconque des revendications 1 à 4, **caractérisé en ce qu'**on maintient les eaux résiduaires à séparer par voie de distillation dans un domaine de pH allant d'environ 12,0 à 12,5.

7. Procédé selon l'une quelconque des revendications 1 à 6, **caractérisé en ce qu'**on fait passer le condensat des vapeurs par-dessus un filtre de charbon activé et **en ce qu'**on le libère, au moins partiellement, de la charge organique.

8. Procédé selon l'une quelconque des revendications 1 à 7, **caractérisé en ce que,** avant de procéder au traitement ultérieur du condensat des vapeurs, on règle ce dernier à un domaine de pH allant d'environ 6 à 8.

9. Procédé selon l'une quelconque des revendications 1 à 8, **caractérisé en ce qu'**on règle le condensat de vapeurs provenant de l'évaporation primaire à un domaine de pH allant d'environ 12,0 à 12,5 et on le soumet à un traitement ultérieur.

10. Procédé selon l'une quelconque des revendications 1 à 9, **caractérisé en ce qu'**on monte en série l'évaporation primaire et secondaire en ce qui concerne le flux de chaleur.

11. Procédé selon l'une quelconque des revendications 1 à 10, **caractérisé en ce qu'**on règle le condensat provenant de l'évaporation secondaire à un pH d'environ 6 à 8 et **en ce qu'**on le traite ultérieurement.

12. Procédé selon l'une quelconque des revendications 1 à 11, **caractérisé en ce que,** au cours de l'étape d'évaporation, en particulier lors de l'évaporation primaire, on procède à une addition dosée d'une huile antimousse et éventuellement, on sépare le produit qui déborde en moussant, de préférence, on le renvoie à l'étape d'évaporation.

13. Procédé selon l'une quelconque des revendications 1 à 12, **caractérisé en ce qu'**on sépare les eaux résiduaires par stripage par voie alcaline avant qu'elles n'entrent dans l'étape d'évaporation, dans une colonne de stripage que l'on a intercalée.

14. Procédé selon la revendication 13, **caractérisé en ce qu'**on traite ultérieurement les vapeurs sortant par la tête de la colonne de stripage.

15. Procédé selon l'une quelconque des revendications 1 à 14, **caractérisé en ce qu'**on concentre préalablement les eaux résiduaires acheminées à l'étape d'évaporation, au cours d'au moins une étape de préconcentration, et **en ce qu'**on utilise les vapeurs obtenues au cours de l'étape de préconcentration pour le réchauffement de l'étape suivante.

16. Procédé selon l'une quelconque des revendications 1 à 15, **caractérisé en ce qu'**on concentre davantage, de préférence, sous vide, les matières solides séparées par précipitation et on renvoie le filtrat provenant de la concentration en retour à l'étape d'évaporation.

17. Procédé selon l'une quelconque des revendications 1 à 16, **caractérisé en ce qu'**on fond les matières solides séparées par précipitation, conjointement avec des sels alcalins, on les décompose et on les transforme ainsi en une matière finale, apte à être transportée et à être laissée en dépôt.

18. Procédé selon l'une quelconque des revendications 4 à 17, **caractérisé en ce qu'**on traite ultérieurement l'air qui s'échappe des installations à vide, en le soumettant à une séparation par voie de distillation et sous une pression sous-atmosphérique.

19. Dispositif pour la mise en oeuvre du procédé selon la revendication 1, comprenant

une installation (1) pour le réglage du pH ;

une installation d'évaporation,

constituée par une étape d'évaporation primaire (7), éventuellement une ou plusieurs étapes d'évaporation secondaire, chaque fois avec un système de circulation qui comprend un séparateur de vapeurs, un échangeur de chaleur et une pompe afin de faire circuler les eaux résiduaires à évaporer ;

une installation de condensation (14) destinée à condenser les vapeurs d'évaporation provenant de l'évaporation primaire ;

une installation destinée au traitement ultérieur du condensat des vapeurs d'évaporation ;

une installation (16) destinée à la précipitation des matières solides, dans laquelle on sépare le résidu de distillation en matières solides et en courant clair ;

ainsi qu'une installation (17) destinée à renvoyer le courant clair dans l'évaporateur primaire (7).

**20.** Dispositif selon la revendication 19, **caractérisé en ce que** l'installation d'évaporation (7) est raccordée à une installation de vide (27).

**21.** Dispositif selon la revendication 19 ou 20, **caractérisé en ce que** l'installation destinée au traitement ultérieur du condensat des vapeurs comprend un collecteur (46) destiné aux condensats des vapeurs provenant des étapes individuelles de l'installation d'évaporation, éventuellement un moyen (47) pour le réglage du pH, ainsi qu'un filtre à charbon actif (48).

**22.** Dispositif selon l'une quelconque des revendications 19 à 21, **caractérisé en ce que** l'installation destinée au traitement ultérieur du condensat de vapeurs comprend une installation (28) destinée au réglage du pH du condensat, ainsi qu'une deuxième installation d'évaporation (29) comprenant, au moins, une étape d'évaporation constituée par un séparateur de vapeurs (30), un échangeur de chaleur (31), ainsi qu'un système de circulation (32), cette deuxième installation d'évaporation (29) étant raccordée à l'échangeur de chaleur (9) de la première installation d'évaporation (7) par l'intermédiaire d'une canalisation (33) qui conduit les vapeurs d'évaporation au sein de l'échangeur de chaleur et **en ce qu'**on prévoit une installation (34) destinée au traitement ultérieur du condensat provenant de cette deuxième installation d'évaporation (29).

**23.** Dispositif selon l'une quelconque des revendications 19 à 22, **caractérisé en ce que,** entre l'installation (1) destinée au réglage de pH et l'installation d'évaporation (7), se trouve une installation de stripage (36) comprenant une colonne de stripage (36a), une canalisation (37) destinée à acheminer la vapeur, un sous-tirage de vapeur par stripage (38), ainsi qu'une canalisation de transport (39) destinée aux eaux résiduaires séparées par stripage pour les acheminer à l'installation d'évaporation (7).

**24.** Dispositif selon l'une quelconque des revendications 19 à 23, **caractérisé en ce que** l'installation destinée au traitement ultérieur du condensat de vapeurs comprend un moyen destiné au réglage du pH (34), ainsi qu'un filtre à charbon activé (40).

**25.** Dispositif selon l'une quelconque des revendications 19 à 24, **caractérisé en ce que** l'installation (16) destinée à la précipitation des matières solides est raccordée à une installation de concentration sous vide (41) et en ce qu'on prévoit une canalisation (42) pour le renvoi du filtrat de concentration au sein de l'évaporateur primaire.

**26.** Dispositif selon l'une quelconque des revendications 20 à 25, **caractérisé en ce que** l'installation (16) destinée à la précipitation des matières solides est raccordée à une installation de fusion (43) qui comprend un moyen (44) destiné à la fusion des matières solides et un moyen (45) destiné à acheminer les substances auxiliaires de fusion telles que des sels alcalins.

**27.** Dispositif selon l'une quelconque des revendications 19 à 26, **caractérisé en ce que** les étapes individuelles des installations d'évaporation (7, 29) sont équipées de pare-gouttes (11, 35) qui sont accouplés à un dispositif de mesure (11a, 35a), de telle sorte que, en cas de débordement de mousse, par l'intermédiaire de l'écoulement qui se forme à l'endroit du pare-gouttes, un signal apparaît qui déclenche l'alimentation automatique de l'huile antimousse, via une canalisation 13, en direction de l'étape d'évaporation.

# Fig.1 Prinzipschema Bi-Destillation

Heizmedium

WA 131

129

130

132

TA 135

133

Destillat I zur II.Destillation

WA 109

134
pH 6,5-8
Säure

110

107

Entschäumer

113

XAS

108

Kristall =
austrag

116

117

TA 111

111a

112

R

OFK

pH 12
Lauge
Destillat I

103

114

127

R

Vakuumpumpe

102
pH 3-4

Industrieabwasser
Sickerwasser
Säure

105

104

reines Destillat zur
Wiederverwendung

Fig. 2    Prinzipschema Monodestillation (alkalisch)
mit vorgeschalteter Strippung

Stripperabdampf oder Kondensat zur Verbrennung

Heizmedium

Abluft des Tankes 206

Entschäumer 213

Abscheider TA 211

211a

XAS

238

208

212

OFK 214

R 227

207

Industrieabwasser
Sickerwasser
Lauge

202

204

203

239

209

WT

217

FA 216

Säure

228

pH 6,5-8

R

reines Dest. zur Wiederverwendung

201    pH  12-12,5

237    SK

236a

210

205

Kristall= austrag

EP 0 176 963 B1

21

EP 0 176 963 B1

Stripperabdampf zur Verbrennung oder über A-Filter

Heizmedium

Entlüftung
306

NaOH
304

Abwasser z.B.mit
HCH,PCB,PCDF

PCDD 302

pH 12-12,5

301

305

303

Dampf

337

SK.

336a

339

338

313

XAS

311a

308

312

307

309

310

316

317

327

OFK 314

TA 311

gereinigtes
Destillat

verbrauchte A-Kohle

A-Kohle=filter

348
A-Kohle=filter

verbrauchte
A-Kohle

Säure

328 pH 6,5 - 8,0

347

Verbrennung
in Sondermüll=anlage

Absackung
u.Deponie
unter Tage

alkalische
Schmelze

Verbren=nung

Deponie

chem./
phys.
Behandlg.

Prinzipschema alkalische Monodestillation
von Abwässern mit Gehalten an
polycyklischen,aromatischen und anderen
**Fig.3** cyklischen organischen Verbindungen

Fig.4

Prinzipschema saure Monodistillation mit
Vorkonzentrierung von Abwasser
mit Gehalt an polycyklischen,
aromatischen und anderen cyklischen
organischen Verbindungen

EP 0 176 963 B1

24

Abwasser

pH-Wert
Einstellung

gereinigtes Abgas

Strippung

A-Kohlefiter
oder
Verbrennung

Heizmedium

Abgas

Sekundär-
Verdampfung

pH-Wert-
Einstellung

Primär-
Verdampfung

pH-Wert-
Einstellung

A-Kohle-
Filter

gereinigtes
Destillat

Feststoff-
Abscheidung

Feststoff

Schlackenlagerung

Verbrennung

alkal.
Schmelze

Deponie

Fig.5   Verfahrens-Blockschema